# EUROPÄISCHE PATENTANMELDUNG

(11) **EP 1 170 327 A1**
(43) Veröffentlichungstag der Anmeldung: **09.01.2002**
(21) Anmeldenummer: 00114688.5
(22) Anmeldetag: 08.07.2000
(51) Int. Cl.: C08K 3/34, A23B 7/00, B65D 65/38

(54) **Kunststoffe zur Adsorption von flüchtigen organischen Verbindungen**

(71) Anmelder: Degussa AG, 40474 Düsseldorf (DE)
(72) Erfinder: Sextl, Elfriede Dr., 63826 Geiselbach (DE); Maier, Hans-Josef, 63755 Alzenau (DE); Müller, Matthias, 63571 Gelnhausen (DE)

(57) **Zusammenfassung**

Kunststoff, der einen hydrophoben Zeolithen enthält, wird durch Vermischen des Kunststoffes mit dem Zeolithen hergestellt. Er kann zur Adsorption von Gasen eingesetzt werden.

## Beschreibung

Die Erfindung betrifft Kunststoffe mit der Fähigkeit, selektiv flüchtige organische Verbindungen aus Gasen oder Gasgemischen zu adsorbieren, sowie deren Anwendung zur Frischhaltung von Obst, Gemüse usw..

Verderbliches Obst, Gemüse und ähnliche nicht verarbeitete pflanzliche Produkte, sowie Pilze, Pflanzen und dergleichen erfordern bei ihrer Lagerung und ihrem Transport spezielle Umgebungsbedingungen, um den fortschreitenden Reifeprozess zu minimieren beziehungsweise den Fäulnisprozess zu verhindern.

Verantwortlich für beschleunigt ablaufende Reife- und Fäulnisprozesse, insbesondere bei klimakterischen Früchten und Gemüsesorten, sind insbesondere das bei der Reifung gebildete Ethylen. Aber auch eine Reihe anderer flüchtiger organischer Verbindungen wie zum Beispiel Propylen, Acetylen und kurzkettige Aldehyde, trägt zur Beschleunigung der Reife bei.

Zur Minimierung der Ethylenbildung werden die eingelagerten oder transportierten verderblichen Güter in der Regel gekühlt. Zusätzlich wird innerhalb der Lager- und Transportbehälter eine bestimmte Atmosphärenzusammensetzung erzeugt, indem man beispielsweise eine bestimmte Luftfeuchtigkeit und/oder einen bestimmten reduzierten Sauerstoffgehalt einstellt (controlled atmosphere - CA).

Es ist bekannt, die Haltbarkeit von Früchten, Obst, Gemüse und Pflanzen etc. dadurch zu verbessern, dass man das in den Lagerbehältern enthaltene Ethylen mittels Zeolith adsorbiert. (EP-A 0417811, JP 0527326, NL 1000595-6).

Es ist bekannt, Obst und Gemüse in Folien oder anderen Verpackungsmaterialien, die hydrophile Zeolithe enthalten und so das bei dem Reifungsprozess gebildete Ethylen adsorbieren können, zu verpacken (JP 11215950 A, JP 63309137 A2, JP 01047337, JP 1148144 A). Die in das Polymer eingebetteten Adsorbentien sind dabei aluminiumreiche, hydrophile Zeolithe mit einem SiO₂/Al₂O₃-Verhältnis von kleiner 10.

Die bekannten Verpackungsmaterialien weisen den Nachteil auf, dass die Adsorbentien hydrophilen Charakter haben und deshalb relativ große Mengen an Wasser adsorbieren. Bei ihrer Verwendung, zum Beispiel als Frischhaltefolie für Obst und Gemüse, wird daher der Wasserdampfgehalt im umgebenden Gasgemisch verringert. Das führt zu einer Beschleunigung der Reifung. Dieser Nachteil wiegt umso schwerer, als eine Konditionierung der Umgebungsluft, wie in großen Lagerräumen durchgeführt wird, bei Lagerung in Kleinverpackungen nicht möglich ist.

Der hohe Anteil an Zeolith in dem Kunststoff von 2 bis 10 % kann ausserdem zu einer Beeinträchtigung der Materialqualität führen. So verringert sich die Reißfestigkeit der Folien, oder es tritt eine Eintrübung der transparenten Kunststoff-Folie ein.

Ein weiterer Nachteil besteht darin, dass die zur Herstellung verwendeten Zeolithe durch ihren hydrophilen Charakter einen großen Wasseranteil haben und diesen Wasseranteil in den Kunststoff eintragen. Bei der Verwendung dieser Zeolithe zur Kunststoffherstellung tritt eine unerwünschte Blasenbildung durch verdampfendes Wasser auf. Vor der Einarbeitung in Kunststoffe müssen diese Zeolithe daher zunächst getrocknet werden.

Gegenstand der Erfindung ist ein Kunststoff, der mindestens einen Zeolithen zur Adsorption von flüchtigen organischen Verbindungen aus Gasen und/oder Gasgemischen enthält, welcher dadurch gekennzeichnet ist, dass die in dem Kunststoff enthaltenen als Adsorptionsmittel wirkenden Zeolithe hydrophoben Charakter haben.

Als hydrophob und organophil können solche Zeolithe bezeichnet werden, die bei 25 °C und einer relativen Luftfeuchtigkeit von 0,7 in der den Zeolithen umgebenden Atmosphäre nicht mehr als 15 Gew.-% Wasser - bezogen auf die Masse des getrockneten Zeolithen - adsorbieren. Vorzugsweise adsorbieren die verwendeten Zeolithe unter diesen Bedingungen weniger als 10 Gew.-%, noch bevorzugter weniger als 5 Gew.-% Wasser - bezogen auf das Trockengewicht des Zeolithen.

Erfindungsgemäß kann der Kunststoff organophile Adsorbentien enthalten und damit in der Lage sein, selektiv flüchtige organische Verbindungen, insbesondere Ethylen, aus einem den Kunststoff umgebenden Gasraum zu adsorbieren.

Als Kunststoff können bekannte Polymere, wie beispielsweise Polyethylen, Polyvinylchlorid und Polypropylen eingesetzt werden.

Als Grundmaterialien können bekannte Kunststoffe benutzt werden, zum Beispiel Polyvinylchlorid, Polyethylenterephthalat, Polystyrol, Polyester, Polyamide, Polyethylen, Polybutylen, Poly-Ethylen-Propylen und Polypropylen, insbesondere orientiertes Polypropylen (OPP).

Als Adsorptionsmittel können hydrophobe Zeolithe vom Strukturtyp FAU, MFI oder MOR eingesetzt werden. Die hydrophoben Zeolithe können dealuminierte Zeolithe sein. Sie können mit Metallen, wie zum Beispiel Kupfer und/oder Silber imprägniert beziehungsweise durch Ionenaustausch mit Ionen aus diesen Metallen modifiziert sein.

Im Gegensatz zur Adsorption von organischen flüchtigen Verbindungen an Zeolithen, zum Beispiel von Ethylen, in großen Lager- und Transporteinrichtungen von Obst und Gemüse, gibt es durch die Kunststoffmatrix keinen, oder nur einen sehr geringen direkten Kontakt der kontaminierten Luft mit dem Adsorbens. Daher muss der Kunststoff so beschaffen sein, dass er einerseits die Poren der Zeolithe nicht verstopft, und andererseits das Ethylen durch ihn hindurch zu den Zeolithpartikeln diffundieren kann (siehe Y. Wang, A.J.Allan, X.D. Cheng, Packag. Technol. Sci., 11(4), (1998), pp. 169-178).

Die Kunststoffe können ein oder mehrere unterschiedliche hydrophobe Zeolithe enthalten.

Die verwendeten hydrophoben Zeolithe können ein SiO₂/Al₂O₃-Verhältnis von 30 bis 1000, vorzugsweise von 100 bis 300 aufweisen. Sie können vom Strukturtyp FAU, MFI oder MOR sein. Die Definition und die Beschreibung dieser Strukturtypen finden sich in W.M. Meier, D.H. Olson: Atlas of Zeolite Structure, 3^{rd} revised ed., Butterworth-Heinemann, London 1992. In einer Ausführungsform können ein oder mehrere Zeolithe dealuminierte Zeolithe sein.

Die Herstellung aluminiumarmer, hydrophober Zeolithe, die diesen Strukturtypen zuzurechnen sind, ist in der Literatur beschrieben:
- Typ Faujasit (FAU):: J. Scherzer in T.E. Whyte, Jr., R.A. Dalla Betta, R.T.K. Baker (eds): Catalytic Materials (ACS Symposium Series 248); American Chemical Society, Washington, D.C. 1984, p. 157; US Patentschrift 5,316,993.
- Typ ZSM-5 (MFI):: P.A. Jacobs, J.A. Martens: Synthesis of High-Silica Aluminosilicate Zeolites (Stud. Surf. Sci. Catal. 33), Elservier, Amsterdam 1987.
- Typ Mordenit (MOR):: N.Y., Chen, J. Phys. Chem. 80 (1976) 60-64; M. M. Olken, J. M. Garces in R. von Ballmoos, J.B. Higgins, M.M.J. Treacy (eds): Proceedings from the Ninth International Zeolite Conference, Butterworth-Heinemann, Boston 1993, p. 559.

Durch ihren hydrophoben Charakter sind die Zeolithe in der Lage, selektiv flüchtige organische Verbindungen zu adsorbieren. Anorganische Substanzen, wie Wasser oder Kohlendioxid, werden nur in vernachlässigbar kleinen Mengen adsorbiert. Folglich werden nur geringste Wasserdampfmengen adsorbiert. Aber auch andere anorganische Gase werden nur in unbedeutenden Mengen adsorbiert. Somit wird die Gaszusammensetzung in der Umgebung des Obstes nicht negativ beeinflusst.

Überraschenderweise ist bei der Verwendung von hydrophoben Zeolithen deutlich weniger Zeolith notwendig, um einen über Tage anhaltenden Effekt auf die Erhaltung der Frische von Obst, Gemüse usw. zu bewirken, als bei den bekannten Methoden, die hydrophile Zeolithe verwenden. Der Massenanteil der Zeolithe im fertigen Kunststoffartikel kann 0,01 - 20 Gew.-%, vorzugsweise 0,1 - 2 Gew.-%, insbesondere 0,1 -0,5 Gew.-% betragen. Die bevorzugten Bereiche liegen somit niedriger als bei bekannten Kunstoffen, bei denen hydrophile Zeolithe verwendet werden.

Durch den sehr niedrigen Anteil an Adsorptionsmittel am hergestellten Kunststoff bleiben die charakteristischen Merkmale des Polymers, wie Festigkeit, Haltbarkeit, Transparenz etc., weitestgehend erhalten. Ein Einsatz in den bekannten Bereichen ist daher ohne Qualitätsverlust, aber mit der zusätzlichen Fähigkeit, Ethylen effektiv zu adsorbieren, möglich.

Die Zeolithe können mit einer mittleren Teilchengröße von D₅₀ = 0,1 bis 20 µm, vorzugsweise von 5 bis 10 µm eingesetzt werden. Der Massenanteil der Zeolithe in dem fertigen Kunststoffartikel kann 0,01 - 20 Gew.-%, vorzugsweise bei 0,1 - 2 Gew.-%, besonders bevorzugt von 0,1 - 0,5 Gew.-% betragen.

Die Zeolithe können mit Metallen wie zum Beispiel Kupfer und/oder Silber imprägniert sein. Der Metallgehalt der imprägnierten Zeolithe kann von 0,1 bis 20 Gew.-% betragen. Die Metalle können sowohl in elementarer als auch in ionischer Form auf dem Zeolithen vorliegen.

Die Imprägnierung der Zeolithe mit Metallen kann nach bekannten Methoden mit Salzen der Metalle vorgenommen werden. Derartige Methoden sind beschrieben beispielsweise in J. Haber, J.H. Block, B. Delmon, Pure & Appl. Chem., 67, (1995), 1257-1306. Die Reduktion zur metallischen Form kann beispielsweise durch Erhitzen unter Formiergas, Wasserstoff oder Formaldehyd ganz oder teilweise durchgeführt werden.

Zur Herstellung der Folie kann zunächst auf an sich bekannte Weise ein Masterbatch aus dem Kunststoff und bis zu 50 Gew-% des Zeolithen hergestellt werden. Anschliessend kann ein Gemisch aus dem Masterbatch und dem zugrundeliegenden Polymer oder auch einem anderen Polymer im für die Endkonzentration des Zeolithen entsprechenden Verhältnis in Standardapparaturen, zum Beispiel einem Extruder, hergestellt und gegebenenfalls gleich weiterverarbeitet werden.

Der fertige Kunststoff kann allgemein zur selektiven Adsorption von flüchtigen organischen Verbindungen eingesetzt werden. Aufgrund seines hydrophoben Charakters adsorbiert er allenfalls Spuren an Wasser.

Vorzugsweise eignet sich der Kunststoff zur Adsorption von flüchtigen organischen Substanzen aus Gasen oder Gasgemischen, in denen sie in nur sehr geringen Konzentrationen von 0,1 - 1000, vorzugsweise von 0,1 - 100 ppm, enthalten sind.

Insbesondere eignet sich der Kunststoff zur Adsorption von Ethylen aus Gasen und/oder Gasgemischen, das bei der Reifung von Obst, Gemüse etc. gebildet wird. Damit kann der Kunststoff in einer beliebigen Ausführungsform insbesondere zum Lagern von Obst, Gemüse, Zwiebeln, Schnittblumen, Pflanzen und anderen nicht weiter verarbeiteten pflanzlichen Produkten verwendet werden.

Der Gegenstand der Erfindung ist weiterhin die Verwendung der erfindungsgemässen Kunststoffe zur Frischhaltung von Obst, Gemüse, Zwiebeln, Blumen sowie anderen nicht verarbeiteten pflanzlichen Produkten. Der hydrophobe Charakter der in dem Kunststoff enthaltenen Zeolithe ist gerade auf diesem Anwendungsgebiet von großer Bedeutung, da eine Verminderung der Wasserdampfkonzentration oder des Kohlendioxidgehalts, die bei der Verwendung von hydrophilen Zeolithen eintritt und daher, zu einer beschleunigten Reifung führt, erfindungsgemäß vermieden wird.

In einer Ausführungsform können die Kunststoffe als Becher, Schachteln, Taschen, Beutel, Schalen, Tüten usw., insbesondere als Folien verwendet werden. Die Folien können wiederum zur Herstellung von Tüten, Taschen usw. verwendet werden.

Die erfindungsgemäßen Kunststoffe weisen folgende Vorteile auf:

Die hydrophobe Zeolithe enthaltenden Kunststoffe adsorbieren nur minimal Wasserdampf und anorganische Gase. Dadurch wird die Gesamtzusammensetzung des Gases oder des Gasgemisches, das in Kontakt mit denm Kunststoff steht, kaum beeinträchtigt.

Ein weiterer Vorteil ist, dass die erfindungsgemäßen Kunststoffe eine hohe Adsorptionskapazität in bezug auf organische flüchtige Verbindungen selbst bei niedrigen Konzentrationen an Zeolith aufweisen.

Da der Zeolithanteil in dem fertigen Kunststoff sehr gering ist, bleiben die für den jeweiligen Kunststoff typischen Eigenschaften, zum Beispiel Flexibilität und Transparenz, weitgehend erhalten.

Erfindungsgemäß sind die Kunststoffe zum Verpacken von Obst, Gemüse, Zwiebeln, Blumen und anderen nicht weiter verarbeiteten pflanzlichen Produkten geeignet, da eine geeignete Gaszusammensetzung, die ausreichend Wasserdampf und ausreichend Kohlendioxid enthält, in der Verpackung erhalten bleibt.

Eine Konditionierung des Zeolithen wie zum Beispiel die vorherige Trocknung bezüglich Entfernung von Wasser aus dem Zeolithen ist bei der Herstellung des erfindungsgemäßen Kunststoffes nicht notwendig.

### Beispiele

### Beispiel 1

Zur Herstellung eines Masterbatches werden 240 g Polyethylen Lupolen 1800 S auf einer Walze bei 10 Umdrehungen pro Minute, einer Friktion von 1/1,4, einem Walzenspalt von 50 µm und einer Temperatur von 120 °C aufgeschmolzen. Nach zwei Minuten Aufschmelzdauer werden 60 g des von der Degussa-Hüls AG, Deutschland vertriebenen hydrophoben Zeoliths Flavith® D 206 für sechs weitere Minuten in des Polymer eingewalzt. Der Kunststoff wird von der Walze entfernt und auf der Hackmühle zerkleinert.

### Beispiel 2

Zur Herstellung eines Masterbatches werden 170 g Polypropylenmaterial Malaysia SND BHD auf einer Walze bei 10 Umdrehungen pro Minute, einer Friktion von 1/1,5, einem Walzenspalt von 300 µm und einer Temperatur von 180 °C aufgeschmolzen. Nach zwei Minutn Aufschmelzdauer werden 9 g des Kunststoffstabilisators B 215 (Ciba-Geigy, Schweiz), 0,6 g Hydrotalcit und 120 g des hydrophoben Zeoliths Flavith® D 108 (Degussa-Hüsl AG, Deutschland) für acht weitere Minuten in den Polymer eingewalzt. Der Kunststoff wird von der Walze entfernt und auf der Hackmühle zerkleinert.

### Beispiel 3

Zur Herstellung einer Folie wird in einem Extruder mit einem Aufsatz zur Herstellung von Blasfolien 1900 g Polypropylenmaterial Malaysia SND BHD und 100 g des in Beispiel 2 hergestellten Masterbatches bei 225 °C aufgeschmolzen und sorgfältig vermischt. Aus diesem Gemisch werden Folien mit einer Dicke von 30 µm geblasen.

## Patentansprüche

1. Kunststoff, der zur Adsorption von flüchtigen organischen Verbindungen aus Gasen und/oder Gasgemischen mindestens einen Zeolithen enthält, **dadurch gekennzeichnet, dass** die in dem Kunststoff enthaltenen als Adsorptionsmittel wirkenden Zeolithe hydrophoben Charakter haben.

2. Kunststoff nach Anspruch 1, **dadurch gekennzeichnet, dass** die hydrophoben Zeolithe vom Strukturtyp FAU, MFI oder MOR sind.

3. Kunststoff nach Anspruch 1, **dadurch gekennzeichnet, dass** die hydrophoben Zeolithe dealuminierte Zeolithe sind.

4. Kunststoff nach Anspruch 1, **dadurch gekennzeichnet, dass** die hydrophoben Zeolithe ein SiO₂/Al₂O₃-Verhältnis von 30 bis 1000 aufweisen.

5. Kunststoff nach Anspruch 1, **dadurch gekennzeichnet, dass** der Massenanteil der Zeolithe im Kunststoffartikel 0,01 - 20 Gew.-% beträgt.

6. Kunststoff nach Anspruch 1, **dadurch gekennzeichnet, dass** die hydrophoben Zeolithe mit einer mittleren Teilchengröße von D₅₀ = 0,1 bis 20 µm eingesetzt werden.

7. Kunststoffe nach Anspruch 1, **dadurch gekennzeichnet, dass** die Zeolithe Metalle in ionischer oder elementarer Form mit einem Gehalt von 0,1 bis 20 Gew.-% enthalten.

8. Kunststoffe nach Anspruch 1, **dadurch gekennzeichnet, dass** der verwendete Polymergrundstoff Polyvinylchlorid, Polyethylenterephthalat, Polystyrol, Polyester, Polyamide, Polybutylen, Polyethylen, Poly-Ethylen-Propylen, Polypropylen oder orientiertes Polypropylen (OPP) ist.

9. Verpackungsmaterialien und Verpackungen, **dadurch gekennzeichnet, dass** sie ganz oder teilweise aus den Kunststoffen nach Anspruch 1 bis 8 hergestellt sind.

10. Verfahren zur Frischhaltung von Obst, Gemüse, Pilzen, Zwiebeln, Blumen und anderen nicht verarbeiteten pflanzlichen Produkten, **dadurch gekennzeichnet, dass** sie in Verpackungsmaterial oder Verpackungen nach Anspruch 9 verpackt sind.

11. Verfahren zur Adsorption oder Entfernung von flüchtigen organischen Verbindungen aus Gasen und/oder Gasgemischen, **dadurch gekennzeichnet, dass** man das kontaminierte Gas/Gasgemisch mit einem Kunststoff nach Anspruch 1 bis 6 und/oder einem Verpackungsmaterial oder einer Verpackung nach Anspruch 8 in Kontakt bringt.
